# EUROPÄISCHE PATENTSCHRIFT

(11) **EP 3 061 261 B1**
(45) Veröffentlichungstag und Bekanntmachung des Hinweises auf die Patenterteilung: **12.12.2018**
(21) Anmeldenummer: 14787122.2
(22) Anmeldetag: 09.10.2014
(51) Int. Cl.: H04Q 9/00, H04L 25/49, G08C 25/00, G06F 13/42

(54) **BATTERIE, BATTERIESTEUERUNG, SOWIE VERFAHREN ZUR GESICHERTEN DIGITALEN ÜBERTRAGUNG VON STROM-MESSWERTEN.**
BATTERY, BATTERY CONTROLLER, AND METHOD FOR THE SECURED DIGITAL TRANSMISSION OF CURRENT MEASUREMENT VALUES
BATTERIE, COMMANDE DE BATTERIE AINSI QUE PROCÉDÉ DE TRANSMISSION NUMÉRIQUE SÉCURISÉE DE VALEURS DE MESURE DE COURANT

(30) Priorität: 24.10.2013 DE 102013221583
(43) Veröffentlichungstag der Anmeldung: 31.08.2016
(73) Patentinhaber: Robert Bosch GmbH, 70442 Stuttgart (DE)
(72) Erfinder: BERGMANN, Sven, 70437 Stuttgart (DE); BUTZMANN, Stefan, 58579 Schalksmühle (DE)
(86) Internationale Anmeldenummer: PCT/EP2014/071670
(87) Internationale Veröffentlichungsnummer: WO 2015/058970

(56) Entgegenhaltungen:
- DE-A1- 10 216 605
- DE-A1-102011 079 126

## Beschreibung

### Stand der Technik

Die vorliegende Erfindung betrifft eine Batterie mit einer Vorrichtung zur digitalen Übertragung von Strom-Messwerten, sowie eine Batteriesteuerung mit einer Vorrichtung zum Empfangen einer digitalen Übertragung von Strom-Messwerten.

In Batteriesystemen kommt der Messung des Batteriestromes, sowohl in der Bestimmung des Ladezustandes, als auch in der Sicherstellung des sicheren Betriebes, eine wichtige Bedeutung zu, um einen potentiell gefährlichen Zustand zu verhindern. Es gibt mehrere Gefährdungen, die auf einen unzulässigen Strom zurückzuführen sind. Zu solchen Gefährdungen zählen unter anderem eine Überlast der Batterie, ein Überstrom oder ein Lithium-Plating.

Bei der Überlast der Batterie wird mehr Strom von der Batterie zur Verfügung gestellt, als der momentane Zustand der Batterie es zulässt (z.B. auf Grund von der aktuellen Temperatur oder des Alterungszustandes der Batterie). Dies führt evtl. zu einem Überhitzen der Batterie und kann in einem gefährlichen Zustand enden.

Bei dem Überstrom wird mehr Strom von der Batterie zur Verfügung gestellt, als die einzelnen Zellen liefern können (über der Spezifikation). Auch dies kann zu einem Überhitzen führen.

Das Laden der Batterie bei sehr tiefen Temperaturen mit hohen Strömen verursacht ein Abscheiden von metallischem Lithium. Dies wird als Lithium-Plating bezeichnet. Lithium-Plating kann ebenfalls gefährlich werden, da dieser Effekt zu einem Kurzschluss in der Batterie führen kann. Eine Überwachung des Lithium-Plating ist besonders kritisch, da schon wenige Ampere zu viel zu einem unerkannten Fehler in der Batterie führen können.

Aufgrund der beschrieben und anderer Gefährdungen ist es nötig einen Strom zuverlässig zu messen. Durch eine Gefahr und Risikoanalyse ergibt sich eine Sicherheitseinstufung der Strommessung nach ASIL C (ISO26262). Eine einkanalige Messung (also z.B. nur mit einem Sensor) ist extrem schwierig zu realisieren, weshalb typischerweise folgende Lösungen im Einsatz sind: Die Verwendung von zusätzlicher Überwachungshardware auf einem Stromsensor (z.B. mittels Komparatoren), die bei einem gewissen Überstrom auslösen oder die Verwendung von zwei verschiedenen Stromsensoriken (z.B. ein Hall-Sensor und ein shunt-basierter Sensor).

Bei der Verwendung von zusätzlicher Überwachungshardware erweist es sich als nachteilig, dass Sensoren mit einer solchen integrierten Lösung zumeist teure, nur für Elektrofahrzeuge entwickelte, Eigenentwicklungen sind, die in geringen Stückzahlen hergestellt werden. Außerdem ist eine Anwendung mit einer solchen zusätzlichen Überwachungshardware im Allgemeinen hinsichtlich der Einstellung von Überstromgrenzen nicht flexibel genug. So ist z.B. keine zeitabhängige oder temperaturabhängige Anpassung möglich.

Die Verwendung von zwei verschiedenen Stromsensoriken, bzw. von zwei unterschiedlichen Messmethoden ist die bislang sicherste Methode, allerdings sind auch hier zwei unterschiedliche Bauteile zu verbauen, was zu erhöhten Kosten führt.

Werden zwei identische Stromsensoren eingesetzt, könnte es bei einer Übertragung eines erfassten Stromes z.B. durch äußere Einflüsse (EMV, etc.) zu Fehlern mit gemeinsamer Ursache kommen.

Die DE3422363C2 beschreibt ein Verfahren zur Datenübertragung in Kraftfahrzeugen nach dem Stand der Technik. Darin werden Datensignale als normale und als invertierte Bitfolge gesendet. Invertiert bedeutet dabei, dass eine logische "1" als logische "0" gesendet wird und eine logische "0" als eine logische "1" gesendet wird. Die Fehlererkennung erfolgt durch einen Vergleich der normalen und der invertierten Bitfolge.
Die DE102011079126A1 beschreibt ein Batteriemanagementsystem nach dem Stand der Technik mit mehreren ersten Messeinheiten sowie mehreren zweiten Messeinheiten, die zur Erfassung einer Messgröße jeweils mindestens einem Batteriemodul einer Batterie zugeordnet sind. Die Messeinheiten übertragen die Messgrößen über zwei getrennte Datenleitungen.
Die DE102010016175A1 beschreibt eine Batterieüberwachungsvorrichtung nach dem Stand der Technik. In dieser erfolgt die Übertragung von Sensordaten über einen primären seriellen Bus und einen redundanten sekundären seriellen Bus.
Die DE10216605A1 beschreibt ein Verfahren zur Übertragung eines digitalen Datenwortes, in dem das Datenwort invertiert und nicht invertiert übertragen wird.

### Offenbarung der Erfindung

Die erfindungsgemäße Batterie mit einer Vorrichtung zur digitalen Übertragung von Strom-Messwerten umfasst einen ersten Sensor, der zum Erfassen einer Amplitude eines Batteriestromes geeignet ist und der eingerichtet ist, eine erste Bitfolge zu erzeugen, welche die durch den ersten Sensor erfasste Amplitude beschreibt, einen zweiten Sensor, der zum Erfassen der Amplitude des Batteriestromes geeignet ist und der eingerichtet ist, eine zweite Bitfolge zu erzeugen, welche die durch den zweiten Sensor erfasste Amplitude beschreibt, eine Spiegelungseinheit, die mit dem zweiten Sensor derart gekoppelt ist, dass die zweite Bitfolge von dem zweiten Sensor an diese übertragen wird, und die eingerichtet ist, eine gespiegelte zweiten Bitfolge durch ein Umkehren einer Reihenfolge der durch die zweite Bitfolge gegebenen Bits zu generieren, wobei ein erstes Bit der zweiten Bitfolge zu einem letzten Bit der gespiegelten zweiten Bitfolge wird und ein letztes Bit der zweiten Bitfolge zu einem ersten Bit der gespiegelten zweiten Bitfolge wird, und eine Sendeschnittstelle, die eingerichtet ist, ein zeitgleiches Einkoppeln der ersten Bitfolge von dem ersten Sensor in einen ersten Datenbus und der gespiegelten zweiten Bitfolge von der Spiegelungseinheit in einen zweiten Datenbus zu ermöglichen. Eine solche Batterie ist vorteilhaft, da durch diese ein Messwert für die Amplitude des Batteriestromes bereitgestellt wird, der durch eine einfache Analyse verifiziert werden kann. Es wird somit eine kostengünstige Stromerfassung mit einer hohen Fehlersicherheit ermöglicht.

Die erfindungsgemäße Batteriesteuerung mit einer Vorrichtung zum Empfangen einer digitalen Übertragung von Strom-Messwerten umfasst eine Empfangsschnittstelle, die eingerichtet ist, eine erste Bitfolge aus einem ersten Datenbus zu entkoppeln und zeitgleich eine gespiegelte zweite Bitfolge aus einem zweiten Datenbus zu entkoppeln, eine Entspiegelungseinheit, die dazu eingerichtet ist, eine zweite Bitfolge durch ein Umkehren einer Reihenfolge der durch die gespiegelte zweite Bitfolge gegebenen Bits zu generieren, wobei ein erstes Bit der gespiegelten zweiten Bitfolge zu einem letzten Bit der zweiten Bitfolge wird und ein letztes Bit der gespiegelten zweiten Bitfolge zu einem ersten Bit der zweiten Bitfolge wird, und eine Kontrolleinheit, die dazu eingerichtet ist, einen möglichen Fehler in der ersten Bitfolge oder der zweiten Bitfolge durch einen Vergleich der ersten Bitfolge mit der zweiten Bitfolge zu erkennen. Eine solche Batteriesteuerung ist vorteilhaft, da durch diese ein Messwert für die Amplitude eines Batteriestromes durch eine einfache Analyse verifiziert werden kann. Es wird somit eine kostengünstige Fehlererkennung ermöglicht.

Das erfindungsgemäße Verfahren zur gesicherten digitalen Übertragung von Strom-Messwerten umfasst ein Erfassen einer Amplitude eines Batteriestromes in einer Batterie durch einen ersten Sensor, ein Erfassen der Amplitude des Batteriestromes in der Batterie durch einen zweiten Sensor, ein Erzeugen einer ersten Bitfolge, welche die durch den ersten Sensor erfasste Amplitude beschreibt, ein Erzeugen einer zweiten Bitfolge, welche die durch den zweiten Sensor erfasste Amplitude beschreibt, ein Generieren einer gespiegelten zweiten Bitfolge durch ein Umkehren einer Reihenfolge der durch die zweite Bitfolge gegebenen Bits, wobei ein erstes Bit der zweiten Bitfolge zu einem letzten Bit der gespiegelten zweiten Bitfolge wird und ein letztes Bit der zweiten Bitfolge zu einem ersten Bit der gespiegelten zweiten Bitfolge wird, ein zeitgleiches Übertragen der ersten Bitfolge an eine Batteriesteuerung über einen ersten Datenbus und der gespiegelten zweiten Bitfolge an die Batteriesteuerung über einen zweiten Datenbus, ein Generieren der zweiten Bitfolge durch ein Umkehren einer Reihenfolge der durch die gespiegelte zweite Bitfolge gegebenen Bits, wobei ein erstes Bit der gespiegelten zweiten Bitfolge zu einem letzten Bit der zweiten Bitfolge wird und ein letztes Bit der gespiegelten zweiten Bitfolge zu einem ersten Bit der zweiten Bitfolge wird, und ein Erkennen eines möglichen Fehlers in der ersten Bitfolge oder der zweiten Bitfolge durch einen Vergleich der ersten Bitfolge mit der zweiten Bitfolge. Das Verfahren ist vorteilhaft, da durch dieses insbesondere Übertragungsfehler in einem Übertragungspfad zwischen den Sensoren der Batterie und der Batteriesteuerung erkannt werden können, die durch einen gemeinsamen Störeinfluss verursacht werden. Zudem können auch Fehler erkannt werden, die durch einen Störeinfluss verursacht werden, welcher nur einen der Sensoren oder einen der Übertragungspfade betrifft.

Die Unteransprüche zeigen bevorzugte Weiterbildungen der Erfindung.

Es ist vorteilhaft, wenn der erste Sensor und der zweite Sensor hinsichtlich des Erfassens der Amplitude des Batteriestromes und des Erzeugens der Bitfolge baugleiche Sensoren sind. Auf diese Weise kann durch die Verwendung gleicher Bauelemente eine Kostenersparnis erreicht werden. Zudem sind die von den baugleichen Sensoren ermittelten Messwerte vergleichbar. Fehler, die durch abweichendes Verhalten aufgrund einer Sensorcharakteristik verursacht werden, werden vermieden.

Des Weiteren ist es vorteilhaft, wenn der erste Datenbus und/oder der zweite Datenbus ein LIN-Bus oder ein CAN-Bus ist. Diese Bus-Systeme finden typischerweise im automobilen Umfeld Anwendung. Somit wird eine Kombination einer erfindungsgemäßen Batterie oder einer erfindungsgemäßen Batteriesteuerung mit üblichen und als zuverlässig erprobten Bus-Systemen ermöglicht. Durch die Verwendung von Standardbauteilen kann wiederum eine Kostenersparnis erreicht werden. Insbesondere ist es vorteilhaft, wenn der erste Datenbus und der zweite Datenbus auf dem selben Bus-System basieren. Somit kann auf einfache Weise eine zeitgleiche Übertragung der ersten und der zweiten Bitfolge erreicht werden. Somit kann eine Störung durch eine gemeinsame Störquelle besonders zuverlässig erkannt werden.

Ebenso vorteilhaft ist es, wenn der erste Sensor und/oder der zweite Sensor einen Hall-Sensor oder einen shunt-basierten Sensor umfasst, da diese Sensoren eine hohe Zuverlässigkeit in einem automobilen Umfeld aufweisen, und zudem als entsprechende Standardbauelemente bezogen werden können.

Bevorzugt wird die Spiegelungseinheit von dem zweiten Sensor umfasst. Damit wird ein Bauelement geschaffen, welches direkt mit einem als Standardbauteil verfügbaren Buscontroller kombiniert werden kann. Es wird somit ein Kostenvorteil erreicht.

Die Kontrolleinheit ist bevorzugt dazu eingerichtet, einen möglichen Fehler in der ersten Bitfolge oder der zweiten Bitfolge durch einen bitweisen Vergleich der ersten Bitfolge mit der zweiten Bitfolge zu erkennen. Ein solcher bitweiser Verglich lässt sich auf einfache und somit sowohl robuste als auch kostengünstige Weise (z.B. durch ein Logikgatter) realisieren.

Ebenso bevorzugt ist die Kontrolleinheit eingerichtet, einen ersten analogen Wert aus der ersten Bitfolge zu erzeugen und einen zweiten analogen Wert aus der zweiten Bitfolge zu erzeugen, und einen möglichen Fehler in der ersten Bitfolge oder der zweiten Bitfolge durch einen Vergleich des ersten analogen Wertes mit dem zweiten analogen Wert zu erkennen. Ein solcher bitweiser Verglich lässt sich auf einfache und somit sowohl robuste als auch kostengünstige Weise (z.B. durch eine Kombination zweier D/A-Wandler mit einem Komparator) realisieren.

Die erfindungsgemäße Batteriesteuerung kann von der erfindungsgemäßen Batterie umfasst werden. Insbesondere werden dabei auch der erste und der zweite Datenbus von der Batterie umfasst.

Insbesondere ist die Batterie eine Fahrzeug- bzw. eine Traktionsbatterie.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Batterie mit einer erfindungsgemäßen Vorrichtung zur digitalen Übertragung von Strom-Messwerten und eine erfindungsgemäße Batteriesteuerung mit einer Vorrichtung zum Empfangen einer digitalen Übertragung von Strom-Messwerten,
- Figur 2: eine grafische Darstellung einer zweiten Bitfolge und einer gespiegelten zweiten Bitfolge bei einer Spiegelung durch eine Spiegelungseinheit,
- Figur 3: eine grafische Darstellung einer gespiegelten zweiten Bitfolge und einer zweiten Bitfolge bei einer Entspiegelung durch eine Entspiegelungseinheit, und
- Figur 4: ein Ablaufdiagram des erfindungsgemäßen Verfahrens zur gesicherten digitalen Übertragung von Strom-Messwerten.

### Ausführungsformen der Erfindung

Die vorliegende Erfindung beschreibt ein System, mit dem eine Stromerfassung mit mehreren identischen Sensoren nach ASIL C möglich ist. Dabei wird insbesondere die Übertragung über einen Datenbus mittels eines modifizierten digitalen Übertragungsprotokolls abgesichert.

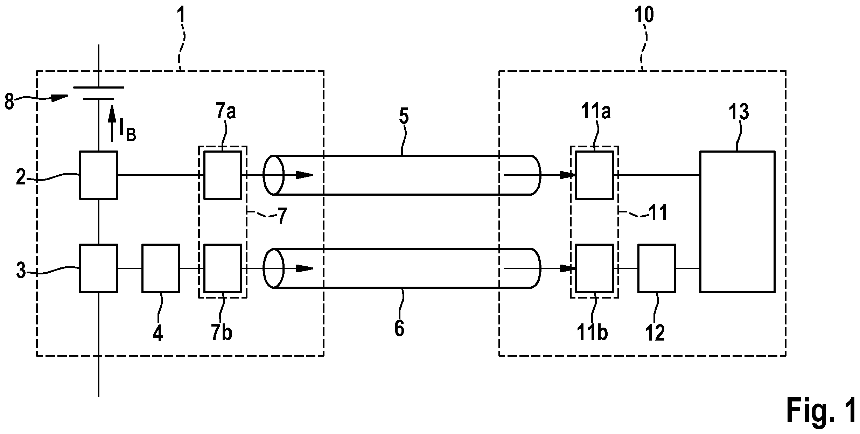

Figur 1 zeigt eine Batterie 1 mit einer erfindungsgemäßen Vorrichtung zur digitalen Übertragung von Strom-Messwerten und eine erfindungsgemäße Batteriesteuerung 10 mit einer Vorrichtung zum Empfangen einer digitalen Übertragung von Strom-Messwerten. Durch die in Figur 1 gezeigte Batterie und die in Figur 1 gezeigte Batteriesteuerung 10 wird das erfindungsgemäße Verfahren ausgeführt.

Die Batterie 1 ist in der gezeigten Ausführungsform eine Traktionsbatterie eines Fahrzeuges. Die Batterie 1 umfasst eine Batteriezelle 8, durch die eine Batteriespannung sowie ein Batteriestrom I_{B} bereitgestellt wird. Ein erster Sensor 2 und ein zweiter Sensor 3 sind hintereinander an einer Leitung angeordnet, die den Batteriestrom I_{B} leitet. Sowohl der erste Sensor 2 als auch der zweite Sensor 3 ist ein Strom-Sensor, also ein Sensor, der zum Erfassen einer Amplitude des Batteriestromes I_{B} geeignet ist. Die Amplitude des Batteriestromes I_{B} ist also ein durch den ersten Sensor 2 und den zweiten Sensor 3 erfasster Messwert. Durch die Anordnung des ersten Sensors 2 und des zweiten Sensors 3 wird erreicht, dass der erste Sensor 2 und der zweite Sensor 3 einen identischen Strom, also den Batteriestrom I_{B} messen.

In der hier gezeigten Ausführungsform umfassen der erste Sensor 2 und der zweite Sensor 3 jeweils einen Hall-Sensor. Die beiden Hall-Sensoren sind baugleich und umschließen die den Batteriestrom I_{B} führende Leitung. Es erfolgt eine induktive Messung des Batteriestromes I_{B}. In alternativen Ausführungsformen können der erste Sensor 2 und der zweite Sensor 3 jeweils einen shunt-basierten Sensoren umfassen. Dabei ist jeweils ein Messwiderstand (Shunt) mit der Batteriezelle in Reihe geschaltet sein, um den Batteriestrom I_{B} über einen Spannungsabfall an dem jeweiligen Messwiderstand zu erfassen.

Erfindungsgemäß ist eine beliebige Kombination von Sensortypen für den ersten Sensor 2 und den zweiten Sensor 3 möglich. Die hier als baugleich gewählten Sensoren sind jedoch vorteilhaft, da diese eine zueinander ähnliche Sensorcharakteristik aufweisen. Auf diese Weise wird z.B. vermieden, dass bei sehr hohen oder sehr niedrigen Temperaturen eine Abweichung zwischen den durch den ersten Sensor 2 erfassten Messwerten und den durch den zweiten Sensor 3 erfassten Messwerten auftritt.

Der erste Sensor 2 erzeugt eine erste Bitfolge, welche die durch den ersten Sensor 2 erfasste Amplitude des Batteriestromes I_{B} beschreibt. Der zweite Sensor 3 erzeugt eine zweite Bitfolge 20, welche die durch den zweiten Sensor 3 erfasste Amplitude Batteriestromes I_{B} beschreibt. Da der erste Sensor 2 und der zweite Sensor 3 in dieser Ausführungsform baugleich sind, erfolgt das Erzeugen der ersten Bitfolge und der zweiten Bitfolge 20 auf identische Weise. So könnte z.B. ein A/D-Wandler von dem ersten Sensor 2 und ein A/D-Wandler von dem zweiten Sensor 3 umfasst sein, um die erste Bitfolge bzw. die zweite Bitfolge 20 zu erzeugen.

Der zweite Sensor 3 ist über eine elektrisch leitfähige Verbindung, die zum Übertragen der zweiten Bitfolge 20 geeignet ist, mit einer Spiegelungseinheit 4 verbunden. Die zweite Bitfolge 2 wird von dem zweiten Sensor 3 an die Spiegelungseinheit 4 übertragen. In der Spiegelungseinheit 4 wird eine gespiegelte zweite Bitfolge 21 durch ein Umkehren einer Reihenfolge der durch die zweite Bitfolge 20 gegebenen Bits generiert.

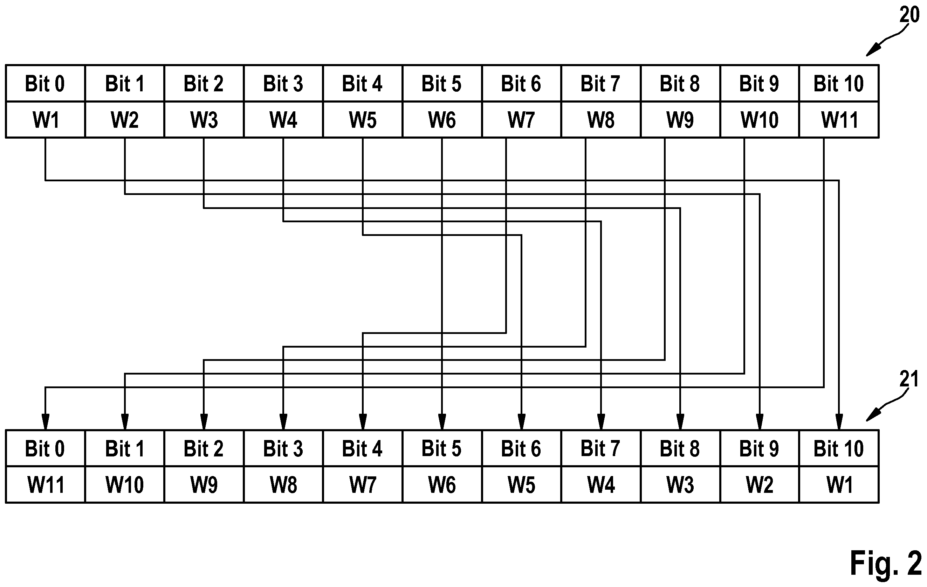

Der zuvor gennannte Vorgang ist in Figur 2 dargestellt. Die zweite Bitfolge 20 wird aus elf aufeinanderfolgenden Bits (Bit 0 - Bit 10) gebildet. In der hier gezeigten Ausführungsform werden die Bits 0 bis 10 der zweiten Bitfolge 20 in chronologischer Reihenfolge von dem zweiten Sensor 3 an die Spiegelungseinheit 4 übertragen. Es wird also zuerst das Bit 0 und zuletzt das Bit 10 der zweiten Bitfolge 20 übertragen. Jedes der Bits 0 bis 10 der zweiten Bitfolge 20 hat einen Bit-Wert. Die Bit-Werte (also "1" oder "0") für die Bits 0 bis 10 werden durch die Werte W1 bis W11 dargestellt. Die gespiegelte zweite Bitfolge 21 wird ebenfalls aus elf aufeinanderfolgenden Bits (Bit 0 - Bit 10) gebildet. Diesen Bits 0 - 10 der gespiegelten zweiten Bitfolge 21 werden die Bit-Werte W1 bis W11 der zweiten Bitfolge 20 zugeordnet. Da die gespiegelte zweite Bitfolge 21 durch ein Umkehren der Reihenfolge der durch die zweite Bitfolge 20 gegebenen Bits generiert wird, werden den Bits 0 - 10 der gespiegelten zweiten Bitfolge 21 die Bit-Werte W1 -W11 der zweiten Bitfolge 20 in umgekehrter Reihenfolge zugeordnet.

So wird der Bit Wert W1 des Bit 0 der zweiten Bitfolge 20 dem Bit 10 der gespiegelten zweiten Bitfolge 21 zugeordnet. Der Bit Wert W2 des Bit 1 der zweiten Bitfolge 20 wird dem Bit 9 der gespiegelten zweiten Bitfolge 21 zugeordnet. Der Bit Wert W3 des Bit 2 der zweiten Bitfolge 20 wird dem Bit 8 der gespiegelten zweiten Bitfolge 21 zugeordnet. Dieser Vorgang wird entsprechend fortgesetzt, bis jedem der Bits 0 bis 10 der gespiegelten zweiten Bitfolge 21 ein Wert zugeordnet ist.

Die Spiegelungseinheit 4 könnte z.B. aus einem Register bestehen, in welches die zweite Bitfolge 20 eingelesen wird, und welches in umgekehrter Reihenfolge ausgelesen wird, um die gespiegelte zweite Bitfolge 21 zu generieren. Die Anzahl der Bits in der ersten, zweiten und gespiegelten zweiten Bitfolge ist in dieser Ausführungsform mit elf Bits gewählt. Entsprechend einer Messauflösung des ersten Sensors 2 bzw. des zweiten Sensors 3 kann auch eine geringere oder eine höhere Anzahl an Bits gewählt werden.

Die Batterie umfasst eine Sendeschnittstelle 7. Diese wird in diesem Ausführungsbeispiel durch eine erste CAN-Schnittstelle 7a und eine zweite CAN-Schnittstelle 7b gebildet. Der erste Sensor 2 ist über eine elektrisch leitfähige Verbindung, die zum Übertragen der ersten Bitfolge geeignet ist, mit der ersten CAN-Schnittstelle 7a verbunden. Die Spiegelungseinheit 4 ist über eine elektrisch leitfähige Verbindung, die zum Übertragen der gespiegelten zweiten Bitfolge geeignet ist, mit der zweiten CAN-Schnittstelle 7b verbunden. Die gespiegelte zweite Bitfolge 21 wird von der Spiegelungseinheit 4 an die zweite CAN-Schnittstelle 7b übertragen. Die erste Bitfolge wird von dem ersten Sensor 2 an die erste CAN-Schnittstelle 7a übertragen.

An die erste CAN-Schnittstelle 7a ist ein erster Datenbus angeschlossen. Dieser erste Datenbus ist ein erster CAN-Bus 5. An die zweite CAN-Schnittstelle 7b ist ein zweiter Datenbus angeschlossen. Dieser zweite Datenbus ist ein zweiter CAN-Bus 6. Die erste Bitfolge wird in den ersten CAN-Bus 5 übertragen. Zeitgleich wird die gespiegelte zweite Bitfolge 21 in den zweiten CAN-Bus 6 übertragen. Die einzelnen Bits der ersten Bitfolge und der gespiegelten zweiten Bitfolge 21 werden in chronologischer Folge in den ersten CAN-Bus 5 bzw. den zweiten CAN-Bus 6 übertragen. Zeitgleich bedeutet, dass jeweils ein Bit der ersten Bitfolge zeitgleich mit einem Bit der gespiegelten zweiten Bitfolge 21 übertragen wird, dessen Position in der gespiegelten zweiten Bitfolge 21 zu dessen Position in der ersten Bitfolge korrespondiert.

Der erste CAN-Bus 5 und der zweite CAN-Bus 6 stellt jeweils eine Datenverbindung zu einer Batteriesteuerung 10 dar. Die Batteriesteuerung 10 kann dabei von der Batterie 1 umfasst sein, oder aber eine externe Batteriesteuerung sein, die nicht von der Batterie 1 umfasst ist. Die Batteriesteuerung 10 umfasst eine Empfangsschnittstelle 11. Diese wird in diesem Ausführungsbeispiel durch eine dritte CAN-Schnittstelle 11a und eine vierte CAN-Schnittstelle 11b gebildet. Der erste CAN-Bus 5 ist an die dritte CAN-Schnittstelle 11a angeschlossen. Der zweite CAN-Bus 6 ist an die vierte CAN-Schnittstelle 11b angeschlossen. Die erste Bitfolge wird über den ersten CAN-Bus 5 übertragen, und an der dritten CAN-Schnittstelle 11a aus diesem ausgekoppelt. Die gespiegelte zweite Bitfolge 21 wird über den zweiten CAN-Bus 6 übertragen, und an der vierten CAN-Schnittstelle 11b aus diesem ausgekoppelt.

Die vierte CAN-Schnittstelle 11b ist über eine elektrisch leitfähige Verbindung, die zum Übertragen der gespiegelten zweiten Bitfolge 21 geeignet ist, mit einer Entspiegelungseinheit 12 verbunden. Die gespiegelte zweite Bitfolge 21 wird von der vierten CAN-Schnittstelle 11b an die Entspiegelungseinheit 12 übertragen. In der Entspiegelungseinheit 12 wird die zweite Bitfolge 21 durch ein Umkehren der Reihenfolge der durch die gespiegelte zweite Bitfolge 20 gegebenen Bits generiert.

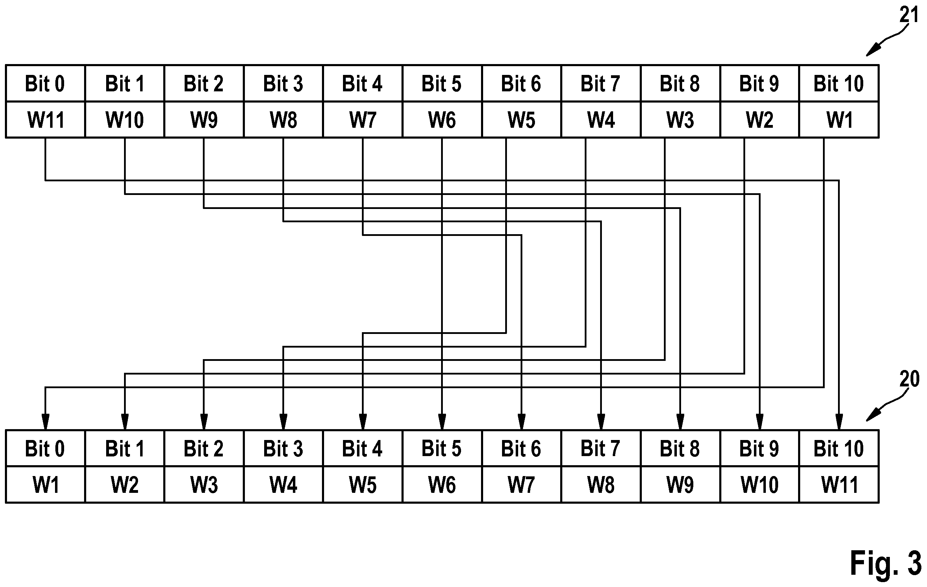

Der zuvor gennannte Vorgang ist in Figur 3 dargestellt. Die gespiegelte zweite Bitfolge 21 wird aus elf aufeinanderfolgenden Bits (Bit 0- Bit 10) gebildet. In der hier gezeigten Ausführungsform werden die Bits 0 bis 10 der gespiegelten zweiten Bitfolge 21 in chronologischer Reihenfolge von der vierte CAN-Schnittstelle 11b an die Entspiegelungseinheit 12 übertragen. Es wird also zuerst das Bit 0 und zuletzt das Bit 10 der gespiegelten zweiten Bitfolge 21 übertragen. Jedes der Bits 0 bis 10 der gespiegelten zweiten Bitfolge 21 hat einen Bit-Wert. Die Bit-Werte (also "1" oder "0") für die Bits 0 bis 10 werden durch die Werte W1 bis W11 dargestellt. Die zweite Bitfolge 20 wird ebenfalls aus elf aufeinanderfolgenden Bits (Bit 0 - Bit 10) gebildet. Diesen Bits 0 - 10 der zweiten Bitfolge 20 werden die Bit-Werte W1 bis W11 der gespiegelten zweiten Bitfolge 21 zugeordnet. Da die zweite Bitfolge 20 durch ein Umkehren der Reihenfolge der durch die gespiegelte zweite Bitfolge 21 gegebenen Bits generiert wird, werden den Bits 0 - 10 der zweiten Bitfolge 20 die Bit-Werte W1 - W11 der gespiegelten zweiten Bitfolge in umgekehrter Reihenfolge zugeordnet.

So wird der Bit Wert W1 des Bit 0 der gespiegelten zweiten Bitfolge 21 dem Bit 10 der zweiten Bitfolge 20 zugeordnet. Der Bit Wert W2 des Bit 1 der gespiegelten zweiten Bitfolge 21 wird dem Bit 9 der zweiten Bitfolge 20 zugeordnet. Der Bit Wert W3 des Bit 2 der gespiegelten zweiten Bitfolge 21 wird dem Bit 8 der zweiten Bitfolge 20 zugeordnet. Dieser Vorgang wird entsprechend fortgesetzt, bis jedem der Bits 0 bis 10 der zweiten Bitfolge 20 ein Wert zugeordnet ist. Erfindungsgemäß wird also die zweite Bitfolge 20 generiert, wie diese ursprünglich von dem zweiten Sensor 3 erzeugt wurde. Dies ist allerdings nur dann der Fall, falls es auf einem Übertragungsweg zwischen dem zweiten Sensor 3 zu der Entspiegelungseinheit 12 zu keinem Datenfehler gekommen ist.

Die Entspiegelungseinheit 12 könnte z.B. aus einem Register bestehen, in welches die gespiegelte zweite Bitfolge 21 eingelesen wird, und welches in umgekehrter Reihenfolge ausgelesen wird, um die zweite Bitfolge 20 zu generieren.

Die dritte CAN-Schnittstelle 11a ist über eine elektrisch leitfähige Verbindung, die zum Übertragen der ersten Bitfolge geeignet ist, mit einer Kontrolleinheit 13 verbunden. Die Entspiegelungseinheit 12 ist über eine elektrisch leitfähige Verbindung, die zum Übertragen der zweiten Bitfolge 20 geeignet ist, mit der Kontrolleinheit 13 verbunden. Die erste Bitfolge wird von der dritten CAN-Schnittstelle 11a an die Kontrolleinheit 13 übertragen. Die zweite Bitfolge 20 wird von der Entspiegelungseinheit 12 an die Kontrolleinheit 13 übertragen.

Die Kontrolleinheit 13 ist dazu eingerichtet, einen möglichen Fehler in der ersten Bitfolge oder der zweiten Bitfolge 20 durch einen Vergleich der ersten Bitfolge mit der zweiten Bitfolge 20 zu erkennen. Dazu erfolgt ein bitweiser Vergleich der ersten Bitfolge mit der zweiten Bitfolge 20. Dabei werden jeweils die Bits der ersten Bitfolge und der zweiten Bitfolge 20 miteinander verglichen, die in ihrer Position in der ersten bzw. der zweiten Bitfolge zueinander korrespondieren. Ist ein Datenfehler auf einem ersten Übertragungsweg zwischen dem ersten Sensor 2 zu der Kontrolleinheit 13 aufgetreten, oder ist ein Datenfehler auf einem zweiten Übertragungsweg zwischen dem zweiten Sensor 3 zu der Kontrolleinheit 13 aufgetreten, so unterscheidet sich die erste Bitfolge von der zweiten Bitfolge an der Kontrolleinheit 13 in zumindest einem Bit. Die erste Bitfolge und die zweite Bitfolge 20 werden also als fehlerhaft betrachtet, wenn diese sich in zumindest einem Bit unterscheiden.

Mit Hilfe des beschriebenen Systems wird zur Übertragung des ersten und des zweiten Messwertes eine gleiche Topologie des ersten und des zweiten Sensors genutzt. Durch eine unterschiedliche Codierung kann ein Fehler mit gemeinsamer Ursache ausgeschlossen werden.

Eine alternative Ausführungsform entspricht der ersten Ausführungsform, jedoch ist die Kontrolleinheit 13 eingerichtet, einen ersten analogen Wert aus der ersten Bitfolge zu erzeugen und einen zweiten analogen Wert aus der zweiten Bitfolge 20 zu erzeugen, und einen möglichen Fehler in der ersten Bitfolge oder der zweiten Bitfolge 20 durch einen Vergleich des ersten analogen Wertes mit dem zweiten analogen Wert zu erkennen. Der erste analoge Wert kann beispielsweise durch einen ersten D/A-Wandler erzeugt werden, dem die erste Bitfolge als ein Eingangssignal gestellt wird. Der erste analoge Wert entspricht damit in diesem Ausführungsbeispiel dem durch den ersten Sensor 2 erfassten Messwert, falls es auf dem ersten Übertragungsweg zu keinem Datenfehler gekommen ist. Der zweite analoge Wert kann beispielsweise durch einen zweiten D/A-Wandler erzeugt werden, dem die zweite Bitfolge 20 als ein Eingangssignal gestellt wird. Der zweite analoge Wert entspricht damit in diesem Ausführungsbeispiel dem durch den zweiten Sensor 3 erfassten Messwert, falls es auf dem zweiten Übertragungsweg zu keinem Datenfehler gekommen ist. Ein möglicher Fehler in der ersten Bitfolge oder der zweiten Bitfolge 20 wird durch einen Vergleich des ersten analogen Wertes mit dem zweiten analogen Wert erkannt. Die erste Bitfolge und die zweite Bitfolge 20 werden als fehlerhaft betrachtet, wenn ein Unterschied zwischen dem ersten analogen Wert und dem zweiten analogen Wert größer als ein vorgegebener Schwellenwert ist. Ein solcher Schwellenwert ist derart gewählt, dass durch den ersten und den zweiten Sensor 2, 3 bedingte Unterschiede, zwischen dem ersten und dem zweiten Messwert und somit zwischen der ersten Bitfolge und der zweiten Bitfolge 20 nicht als Fehler erkannt werden. Bei einer entsprechenden Genauigkeit des ersten Sensors 2 und des zweiten Sensors 3 kann dieser Schwellenwert auch gleich "0" gewählt sein.

In einer weiteren alternativen Ausführungsform, die im Wesentlichen der ersten Ausführungsform entspricht, wird anstatt des CAN-Buses ein LIN-Bus genutzt.

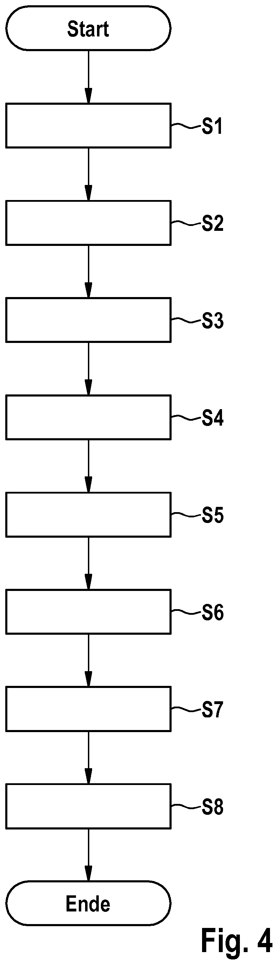

Figur 4 zeigt ein Ablaufdiagram des erfindungsgemäßen Verfahrens zur gesicherten digitalen Übertragung von Strom-Messwerten. Das Verfahren kann auf unterschiedliche Weisen angestoßen werden. Bevorzugt wird das Verfahren durch ein Anforderungssignal angestoßen, welches z.B. von einer Batteriesteuerung erzeugt wird. Ebenso vorteilhaft ist eine Durchführung des Verfahrens in gegebenen zeitlichen Intervallen.

In einem ersten Schritt S1 erfolgt ein Erfassen einer Amplitude eines Batteriestromes I_{B} in einer Batterie 1 durch einen ersten Sensor 2. In einem zweiten Schritt S2 erfolgt ein Erfassen der Amplitude des Batteriestromes I_{B} in der Batterie 1 durch einen zweiten Sensor 3. Dabei ist es vorteilhaft, wenn der erste Sensor 2 und der zweite Sensor 3 hinsichtlich des Erfassens der Amplitude des Batteriestromes I_{B} und des Erzeugens der Bitfolge baugleiche Sensoren sind. Der erste Sensor 2 und/oder der zweite Sensor 3 umfassen insbesondere einen Hall-Sensor oder einen shunt-basierten Sensor.

In einem dritten Schritt S3 erfolgt ein Erzeugen einer ersten Bitfolge, welche die durch den ersten Sensor 2 erfasste Amplitude beschreibt. In einem vierten Schritt S4 erfolgt ein Erzeugen einer zweiten Bitfolge, welche die durch den zweiten Sensor 3 erfasste Amplitude beschreibt. Die erste und die zweite Bitfolge sind somit ein digitaler Wert der erfassten Amplitude.

In einem fünften Schritt S5 erfolgt ein Generieren einer gespiegelten zweiten Bitfolge 21 durch ein Umkehren einer Reihenfolge der durch die zweite Bitfolge gegebenen Bits, wobei ein erstes Bit der zweiten Bitfolge 20 zu einem letzten Bit der gespiegelten zweiten Bitfolge 21 wird und ein letztes Bit der zweiten Bitfolge 20 zu einem ersten Bit der gespiegelten zweiten Bitfolge 21 wird. Der fünfte Schritt S5 kann durch eine dafür eingerichtete Spiegelungseinheit 4 ausgeführt werden. Ebenso kann der Schritt S5 durch den zweiten Sensor 3 ausgeführt werden. In diesem Falle umfasst der zweite Sensor 3 die Spiegelungseinheit 4.

In einem sechsten Schritt S6 erfolgt ein zeitgleiches Übertragen der ersten Bitfolge an eine Batteriesteuerung 10 über einen ersten Datenbus, z.B. einen ersten CAN-Bus 5, und der gespiegelten zweiten Bitfolge 21 an die Batteriesteuerung 10 über einen zweiten Datenbus, z.B. einen zweiten CAN-Bus 6. Der ersten Datenbus oder der zweiten Datenbus sind bevorzugt ein LIN-Bus oder ein CAN-Bus. In diesem Falle wird zum Übertragen der ersten Bitfolge und der gespiegelten zweiten Bitfolge 21 auf die für diese Bus-Systeme spezifizierten Übertragungsprotokolle zurückgegriffen.

In einem siebten Schritt S7 erfolgt ein Generieren der zweiten Bitfolge 20 durch ein Umkehren einer Reihenfolge der durch die gespiegelte zweite Bitfolge 21 gegebenen Bits, wobei ein erstes Bit der gespiegelten zweiten Bitfolge 21 zu einem letzten Bit der zweiten Bitfolge 20 wird und ein letztes Bit der gespiegelten zweiten Bitfolge 21 zu einem ersten Bit der zweiten Bitfolge 20 wird.

In einem achten Schritt S8 erfolgt ein Erkennen eines möglichen Fehlers in der ersten Bitfolge oder der zweiten Bitfolge 20 durch einen Vergleich der ersten Bitfolge mit der zweiten Bitfolge 20.

Ein solcher im achten Schritt S8 durchgeführter Vergleich kann z.B. durch einen bitweisen Vergleich der ersten Bitfolge mit der zweiten Bitfolge 20 erfolgen. Dabei wird jedes Bit der ersten Bitfolge mit einem Bit der zweiten Bitfolge 20 verglichen, das in seiner Position in der zweiten Bitfolge 20 zu dessen Position in der ersten Bitfolge korrespondiert. Sind die beiden verglichenen Bits nicht gleich, so ist ein Fehler in der ersten oder der zweiten Bitfolge 20 erkannt.

Ein solcher im achten Schritt S8 durchgeführter Vergleich kann auch dadurch erfolgen, dass ein erster analoger Wert aus der ersten Bitfolge erzeugt wird und einen zweiter analoger Wert aus der zweiten Bitfolge 20 erzeugt wird, und ein möglichen Fehler in der ersten Bitfolge oder der zweiten Bitfolge 20 durch einen Vergleich des ersten analogen Wertes mit dem zweiten analogen Wert erkannt wird. Die erste Bitfolge und die zweite Bitfolge 20 werden also wieder in den ursprünglichen Wert gewandelt, aus dem diese Bitfolgen erzeugt wurden. Es wird verglichen, ob diese Werte einander entsprechen. Entsprechen sich diese Werte nicht, so ist ein Fehler in der ersten Bitfolge oder der zweiten Bitfolge 20 erkannt. Ein Entsprechen dieser Werte bedeutet, dass die Werte entweder gleich sind oder zumindest in einem ähnlichen Wertebereich liegen, der durch eine für den ersten Sensor 2 und den zweiten Sensor 3 übliche Messungenauigkeit definiert ist.

Nach Abschluss des achten Schrittes S8 wird das Verfahren beendet.

Alle Ausführungsformen der Erfindung weisen den Vorteil auf, dass durch einen Fehler in der ersten Bitfolge oder in der zweiten Bitfolge 20 nicht nur auf Datenfehler in dem ersten oder dem zweiten Übertragungspfad geschlossen werden kann, sondern auch auf eine Zuverlässigkeit der durch den ersten Sensor 2 und den zweiten Sensor 3 erfassten Messwerte geschlossen werden kann. Eine Abweichung zwischen dem durch den ersten Sensor 2 erfassten ersten Messwert und dem durch den zweiten Sensor 3 erfassten zweiten Messwert wird als ein Fehler in einer der Bitfolgen erkannt und die entsprechenden Messwerte können somit als unzuverlässig eingestuft werden.

Unabhängig davon, welches Bus-System genutzt wird ist es möglich, mehrere erste Sensoren 2 und mehrere zweite Sensoren 3, die unterschiedliche Batterieströme I_{B} erfassen, erfindungsgemäß an einen ersten Datenbus und einen zweiten Datenbus zu koppeln. Die Empfangsschnittstelle 11 könnte in diesem Falle einen ersten Buscontroller für den ersten Datenbus und einen zweiten Buscontroller für den zweiten Datenbus umfassen.

## Patentansprüche

1. Batterie (1) mit einer Vorrichtung zur digitalen Übertragung von Strom-Messwerten, umfassend:
- einen ersten Sensor (2), der zum Erfassen einer Amplitude eines Batteriestromes (I_{B}) geeignet ist und der eingerichtet ist, eine erste Bitfolge zu erzeugen, welche die durch den ersten Sensor (2) erfasste Amplitude beschreibt,
- einen zweiten Sensor (3), der zum Erfassen der Amplitude des Batteriestromes (I_{B}) geeignet ist und der eingerichtet ist, eine zweite Bitfolge (20) zu erzeugen, welche die durch den zweiten Sensor (3) erfasste Amplitude beschreibt,
- eine Spiegelungseinheit (4), die mit dem zweiten Sensor (3) derart gekoppelt ist, dass die zweite Bitfolge (20) von dem zweiten Sensor (3) an diese übertragen wird, und die eingerichtet ist, eine gespiegelte zweite Bitfolge (21) durch ein Umkehren einer Reihenfolge der durch die zweite Bitfolge (20) gegebenen Bits zu generieren, wobei ein erstes Bit der zweiten Bitfolge (20) zu einem letzten Bit der gespiegelten zweiten Bitfolge (21) wird und ein letztes Bit der zweiten Bitfolge (20) zu einem ersten Bit der gespiegelten zweiten Bitfolge (21) wird, und
- eine Sendeschnittstelle (7), die eingerichtet ist, ein zeitgleiches Einkoppeln der ersten Bitfolge von dem ersten Sensor (2) in einen ersten Datenbus (5) und der gespiegelten zweiten Bitfolge (21) von der Spiegelungseinheit (4) in einen zweiten Datenbus (6) zu ermöglichen.

2. Batterie nach Anspruch 1, **dadurch gekennzeichnet, dass** der erste Sensor (2) und der zweite Sensor (3) hinsichtlich des Erfassens der Amplitude des Batteriestromes (I_{B}) und des Erzeugens der Bitfolge baugleiche Sensoren sind.

3. Batterie nach einem der vorgehenden Ansprüche, **dadurch gekennzeichnet, dass** der erste Datenbus (5) und/oder der zweite Datenbus (6) ein LIN-Bus oder ein CAN-Bus ist.

4. Batterie nach einem der vorgehenden Ansprüche, **dadurch gekennzeichnet, dass** der erste Sensor (2) und/oder der zweite Sensor (3) einen Hall-Sensor oder einen shunt-basierten Sensor umfasst.

5. Batterie nach einem der vorgehenden Ansprüche, **dadurch gekennzeichnet, dass** die Spiegelungseinheit (4) von dem zweiten Sensor (3) umfasst wird.

6. Batteriesteuerung (10) mit einer Vorrichtung zum Empfangen einer digitalen Übertragung von Strom-Messwerten, umfassend:
- eine Empfangsschnittstelle (11), die eingerichtet ist, eine erste Bitfolge, welche eine durch einen ersten Sensor (2) erfasste Amplitude eines Batteriestromes (I_{B}) beschreibt, aus einem ersten Datenbus (5) zu entkoppeln und zeitgleich eine gespiegelte zweite Bitfolge (21), welche eine durch einen zweiten Sensor (3) erfasste Amplitude des Batteriestromes (I_{B}) beschreibt, aus einem zweiten Datenbus (6) zu entkoppeln,
- eine Entspiegelungseinheit (12), die dazu eingerichtet ist, eine zweite Bitfolge (20) durch ein Umkehren einer Reihenfolge der durch die gespiegelte zweite Bitfolge (21) gegebenen Bits zu generieren, wobei ein erstes Bit der gespiegelten zweiten Bitfolge (21) zu einem letzten Bit der zweiten Bitfolge (20) wird und ein letztes Bit der gespiegelten zweiten Bitfolge (21) zu einem ersten Bit der zweiten Bitfolge (20) wird, und
- eine Kontrolleinheit (13), die dazu eingerichtet ist, einen möglichen Fehler in der ersten Bitfolge oder der zweiten Bitfolge (20) durch einen Vergleich der ersten Bitfolge mit der zweiten Bitfolge (20) zu erkennen.

7. Batteriesteuerung nach Anspruch 6, **dadurch gekennzeichnet, dass** die Kontrolleinheit (13) eingerichtet ist, einen möglichen Fehler in der ersten Bitfolge oder der zweiten Bitfolge (20) durch einen bitweisen Vergleich der ersten Bitfolge mit der zweiten Bitfolge (20) zu erkennen.

8. Batteriesteuerung nach Anspruch 6, **dadurch gekennzeichnet, dass** die Kontrolleinheit (13) eingerichtet ist,
- einen ersten analogen Wert aus der ersten Bitfolge zu erzeugen und einen zweiten analogen Wert aus der zweiten Bitfolge (20) zu erzeugen, und
- einen möglichen Fehler in der ersten Bitfolge oder der zweiten Bitfolge (20) durch einen Vergleich des ersten analogen Wertes mit dem zweiten analogen Wert zu erkennen.

9. Batteriesteuerung (10) nach einem der Ansprüche 6 bis 8, **dadurch gekennzeichnet, dass** der erste Datenbus (5) und/oder der zweite Datenbus (6) ein LIN-Bus oder ein CAN-Bus ist.

10. Verfahren zur gesicherten digitalen Übertragung von Strom-Messwerten, umfassend:
- Erfassen (S1) einer Amplitude eines Batteriestromes (I_{B}) in einer Batterie (1) durch einen ersten Sensor (2),
- Erfassen (S2) der Amplitude des Batteriestromes (I_{B}) in der Batterie (1) durch einen zweiten Sensor (3),
- Erzeugen (S3) einer ersten Bitfolge, welche die durch den ersten Sensor (2) erfasste Amplitude beschreibt,
- Erzeugen (S4) einer zweiten Bitfolge, welche die durch den zweiten Sensor (3) erfasste Amplitude beschreibt,
- Generieren (S5) einer gespiegelten zweiten Bitfolge (21) durch ein Umkehren einer Reihenfolge der durch die zweite Bitfolge gegebenen Bits, wobei ein erstes Bit der zweiten Bitfolge (20) zu einem letzten Bit der gespiegelten zweiten Bitfolge (21) wird und ein letztes Bit der zweiten Bitfolge (20) zu einem ersten Bit der gespiegelten zweiten Bitfolge (21) wird,
- zeitgleiches Übertragen (S6) der ersten Bitfolge an eine Batteriesteuerung (10) über einen ersten Datenbus (5) und der gespiegelten zweiten Bitfolge (21) an die Batteriesteuerung (10) über einen zweiten Datenbus (6),
- Generieren (S7) der zweiten Bitfolge (20) durch ein Umkehren einer Reihenfolge der durch die gespiegelte zweite Bitfolge gegebenen Bits, wobei ein erstes Bit der gespiegelten zweiten Bitfolge (21) zu einem letzten Bit der zweiten Bitfolge (20) wird und ein letztes Bit der gespiegelten zweiten Bitfolge (21) zu einem ersten Bit der zweiten Bitfolge (20) wird, und
- Erkennen (S8) eines möglichen Fehlers in der ersten Bitfolge oder der zweiten Bitfolge (20) durch einen Vergleich der ersten Bitfolge mit der zweiten Bitfolge (20).

## Claims

1. Battery (1) having an apparatus for digitally transmitting current measured values, comprising:
- a first sensor (2) which is suitable for capturing an amplitude of a battery current (I_{B}) and is set up to generate a first bit string which describes the amplitude captured by the first sensor (2),
- a second sensor (3) which is suitable for capturing the amplitude of the battery current (I_{B}) and is set up to generate a second bit string (20) which describes the amplitude captured by the second sensor (3),
- a mirroring unit (4) which is coupled to the second sensor (3) in such a manner that the second bit string (20) is transmitted from the second sensor (3) to the mirroring unit and which is set up to generate a mirrored second bit string (21) by reversing an order of the bits given by the second bit string (20), wherein a first bit in the second bit string (20) becomes a last bit in the mirrored second bit string (21) and a last bit in the second bit string (20) becomes a first bit in the mirrored second bit string (21), and
- a transmission interface (7) which is set up to make it possible to simultaneously couple the first bit string from the first sensor (2) into a first data bus (5) and to couple the mirrored second bit string (21) from the mirroring unit (4) into a second data bus (6).

2. Battery according to Claim 1, **characterized in that** the first sensor (2) and the second sensor (3) are structurally identical sensors with respect to capturing the amplitude of the battery current (I_{B}) and generating the bit string.

3. Battery according to one of the preceding claims, **characterized in that** the first data bus (5) and/or the second data bus (6) is/are a LIN bus or a CAN bus.

4. Battery according to one of the preceding claims, **characterized in that** the first sensor (2) and/or the second sensor (3) comprise(s) a Hall sensor or a shunt-based sensor.

5. Battery according to one of the preceding claims, **characterized in that** the mirroring unit (4) is included in the second sensor (3).

6. Battery controller (10) having an apparatus for receiving a digital transmission of current measured values, comprising:
- a reception interface (11) which is set up to decouple a first bit string, which describes an amplitude of a battery current (I_{B}) captured by a first sensor (2), from a first data bus (5) and to simultaneously decouple a mirrored second bit string (21), which describes an amplitude of the battery current (I_{B}) captured by a second sensor (3), from a second data bus (6),
- an anti-mirroring unit (12) which is set up to generate a second bit string (20) by reversing an order of the bits given by the mirrored second bit string (21), wherein a first bit in the mirrored second bit string (21) becomes a last bit in the second bit string (20) and a last bit in the mirrored second bit string (21) becomes a first bit in the second bit string (20), and
- a monitoring unit (13) which is set up to identify a possible error in the first bit string or the second bit string (20) by comparing the first bit string with the second bit string (20).

7. Battery controller according to Claim 6, **characterized in that** the monitoring unit (13) is set up to identify a possible error in the first bit string or the second bit string (20) by comparing the first bit string with the second bit string (20) bit by bit.

8. Battery controller according to Claim 6, **characterized in that** the monitoring unit (13) is set up
- to generate a first analogue value from the first bit string and to generate a second analogue value from the second bit string (20), and
- to identify a possible error in the first bit string or the second bit string (20) by comparing the first analogue value with the second analogue value.

9. Battery controller (10) according to one of Claims 6 to 8, **characterized in that** the first data bus (5) and/or the second data bus (6) is/are a LIN bus or a CAN bus.

10. Method for securely digitally transmitting current measured values, comprising:
- capturing (S1) an amplitude of a battery current (I_{B}) in a battery (1) by means of a first sensor (2),
- capturing (S2) the amplitude of the battery current (I_{B}) in the battery (1) by means of a second sensor (3),
- generating (S3) a first bit string which describes the amplitude captured by the first sensor (2),
- generating (S4) a second bit string which describes the amplitude captured by the second sensor (3),
- generating (S5) a mirrored second bit string (21) by reversing an order of the bits given by the second bit string, wherein a first bit in the second bit string (20) becomes a last bit in the mirrored second bit string (21) and a last bit in the second bit string (20) becomes a first bit in the mirrored second bit string (21),
- simultaneously transmitting (S6) the first bit string to a battery controller (10) via a first data bus (5) and the mirrored second bit string (21) to the battery controller (10) via a second data bus (6),
- generating (S7) the second bit string (20) by reversing an order of the bits given by the mirrored second bit string, wherein a first bit in the mirrored second bit string (21) becomes a last bit in the second bit string (20) and a last bit in the mirrored second bit string (21) becomes a first bit in the second bit string (20), and
- identifying (S8) a possible error in the first bit string or the second bit string (20) by comparing the first bit string with the second bit string (20).

## Revendications

1. Batterie (1), comprenant un dispositif pour la transmission numérique de valeurs mesurées du courant, comprenant :
- un premier capteur (2), qui est adapté pour acquérir une intensité d'un courant de batterie (I_{B}) et conçu pour générer une première séquence binaire qui décrit l'intensité acquise par le premier capteur (2),
- un deuxième capteur (3), qui est adapté pour acquérir l'intensité du courant de batterie (I_{B}) et conçu pour générer une deuxième séquence binaire (20) qui décrit l'intensité acquise par le deuxième capteur (3),
- une unité de symétrisation (4) qui est connectée au deuxième capteur (3) de telle sorte que la deuxième séquence binaire (20) est transmise du deuxième capteur (3) à celle-ci et qui est conçue pour générer une deuxième séquence binaire en symétrie (21) par une inversion d'une séquence des bits délivrés par la deuxième séquence binaire (20), un premier bit de la deuxième séquence binaire (20) devenant un dernier bit de la deuxième séquence binaire en symétrie (21) et un dernier bit de la deuxième séquence binaire (20) devenant un premier bit de la deuxième séquence binaire en symétrie (21), et
- une interface d'émission (7) qui est conçue pour permettre une injection simultanée de la première séquence binaire du premier capteur (2) dans un premier bus de données (5) et de la deuxième séquence binaire en symétrie (21) de l'unité de symétrisation (4) dans un deuxième bus de données (6).

2. Batterie selon la revendication 1, **caractérisée en ce que** le premier capteur (2) et le deuxième capteur (3) sont des capteurs de construction identique du point de vue de l'acquisition de l'intensité du courant de batterie (I_{B}) et de la génération de la séquence binaire.

3. Batterie selon l'une des revendications précédentes, **caractérisée en ce que** le premier bus de données (5) et/ou le deuxième bus de données (6) est un bus LIN ou un bus CAN.

4. Batterie selon l'une des revendications précédentes, **caractérisée en ce que** le premier capteur (2) et/ou le deuxième capteur (3) comprend un capteur à effet Hall ou un capteur à base de shunt.

5. Batterie selon l'une des revendications précédentes, **caractérisée en ce que** l'unité de symétrisation (4) est comprise par le deuxième capteur (3) .

6. Commande de batterie (10), comprenant un dispositif pour la réception d'une transmission numérique de valeurs mesurées du courant, comprenant :
- une interface de réception (11) qui est conçue pour extraire par découplage d'un premier bus de données (5) une première séquence binaire, laquelle décrit une intensité d'un courant de batterie (I_{B}) acquise par un premier capteur (2) et, simultanément, extraire par découplage d'un deuxième bus de données (6) une deuxième séquence binaire en symétrie (21), laquelle décrit une intensité du courant de batterie (I_{B}) acquise par un deuxième capteur (3),
- une unité de désymétrisation (12), qui est conçue pour générer une deuxième séquence binaire (20) par une inversion d'une séquence des bits délivrés par la deuxième séquence binaire en symétrie (21), un premier bit de la deuxième séquence binaire en symétrie (21) devenant un dernier bit de la deuxième séquence binaire (20) et un dernier bit de la deuxième séquence binaire en symétrie (21) devenant un premier bit de la deuxième séquence binaire (20), et
- une unité de contrôle (13) qui est conçue pour reconnaître une erreur possible dans la première séquence binaire ou dans la deuxième séquence binaire (20) par une comparaison de la première séquence binaire avec la deuxième séquence binaire (20).

7. Commande de batterie selon la revendication 6, **caractérisée en ce que** l'unité de contrôle (13) est conçue pour reconnaître une erreur possible dans la première séquence binaire ou dans la deuxième séquence binaire (20) par une comparaison bit par bit de la première séquence binaire avec la deuxième séquence binaire (20).

8. Commande de batterie selon la revendication 6, **caractérisée en ce que** l'unité de contrôle (13) est conçue pour
- générer une première valeur analogique à partir de la première séquence binaire et une deuxième valeur analogique à partir de la deuxième séquence binaire (20), et
- reconnaître une erreur possible dans la première séquence binaire ou dans la deuxième séquence binaire (20) par une comparaison de la première valeur analogique avec la deuxième valeur analogique.

9. Commande de batterie (10) selon l'une des revendications 6 à 8, **caractérisée en ce que** le premier bus de données (5) et/ou le deuxième bus de données (6) est un bus LIN ou un bus CAN.

10. Procédé de transmission numérique sécurisée de valeurs mesurées du courant, comprenant :
- l'acquisition (S1) d'une intensité d'un courant de batterie (I_{B}) dans une batterie (1) par un premier capteur (2),
- l'acquisition (S2) de l'intensité du courant de batterie (I_{B}) dans la batterie (1) par un deuxième capteur (3),
- la génération (S3) d'une première séquence binaire qui décrit l'intensité acquise par le premier capteur (2),
- la génération (S4) d'une deuxième séquence binaire qui décrit l'intensité acquise par le deuxième capteur (3),
- la génération (S5) d'une deuxième séquence binaire en symétrie (21) par une inversion d'une séquence des bits délivrés par la deuxième séquence binaire, un premier bit de la deuxième séquence binaire (20) devenant un dernier bit de la deuxième séquence binaire en symétrie (21) et un dernier bit de la deuxième séquence binaire (20) devenant un premier bit de la deuxième séquence binaire en symétrie (21),
- la transmission simultanée (S6) de la première séquence binaire à une commande de batterie (10) par le biais d'un premier bus de données (5) et de la deuxième séquence binaire en symétrie (21) à la commande de batterie (10) par le biais d'un deuxième bus de données (6),
- la génération (S7) de la deuxième séquence binaire (20) par une inversion d'une séquence des bits délivrés par la deuxième séquence binaire en symétrie, un premier bit de la deuxième séquence binaire en symétrie (21) devenant un dernier bit de la deuxième séquence binaire (20) et un dernier bit de la deuxième séquence binaire en symétrie (21) devenant un premier bit de la deuxième séquence binaire (20), et
- la reconnaissance (S8) d'une erreur possible dans la première séquence binaire ou dans la deuxième séquence binaire (20) par une comparaison de la première séquence binaire avec la deuxième séquence binaire (20).
